# EUROPÄISCHE PATENTSCHRIFT

(11) **EP 1 999 347 B1**
(45) Veröffentlichungstag und Bekanntmachung des Hinweises auf die Patenterteilung: **21.07.2010**
(21) Anmeldenummer: 07704165.5
(22) Anmeldetag: 26.01.2007
(51) Int. Cl.: F01N 3/20

(54) **VERFAHREN UND DOSIERSYSTEM ZUR SCHADSTOFFREDUKTION IN KRAFTFAHRZEUGABGASEN**
METHOD AND METERING SYSTEM FOR REDUCING POLLUTANTS IN MOTOR VEHICLE EXHAUST GASES
PROCEDE DE SYSTEME DE DOSAGE EN VUE DE LA REDUCTION DES SUBSTANCES NOCIVES DANS LES GAZ D'ECHAPPEMENT D'UN VEHICULE AUTOMOBILE

(30) Priorität: 21.03.2006 DE 102006012855
(43) Veröffentlichungstag der Anmeldung: 10.12.2008
(73) Patentinhaber: Robert Bosch GmbH, 70442 Stuttgart (DE)
(72) Erfinder: BUERGLIN, Markus, 71254 Ditzingen (DE); CZASCH, Martin, 71364 Winnenden (DE)
(86) Internationale Anmeldenummer: PCT/EP2007/050774
(87) Internationale Veröffentlichungsnummer: WO 2007/107396

(56) Entgegenhaltungen:
- EP-A- 1 149 991
- WO-A-02/24312
- WO-A-2006/040086
- DE-A1- 4 203 807
- DE-A1- 10 324 482
- DE-A1-102004 050 022
- DE-A1-102004 054 238
- US-A1- 2004 093 856

## Beschreibung

### Technisches Gebiet

Ein bewährtes Verfahren zur Reduktion von Schadstoffen, insbesondere zur Reduktion von Stickoxiden im Abgas mager betriebener Verbrennungsmotoren, ist die Reduktion der Stickoxide mittels geeigneter chemischer Reduktionsmittel. Den bekannten Verfahren ist gemeinsam, dass fluide (d. h. flüssige oder gasförmige), schadstoffreduzierende Medien in einen Abgastrakt eines Verbrennungsmotors eingespritzt werden, wo sie mit den Schadstoffen in den Abgasen reagieren und diese chemisch umwandeln. Es wird daher im folgenden ein Dosiersystem zur Dosierung derartiger fluider, schadstoffreduzierender Medien vorgeschlagen, welches für Reduktion von Schadstoffen in Abgasen von Kraftfahtzeugen eingesetzt werden kann.

### Stand der Technik

Bei dem sogenannten Ammoniak-SCR-Verfahren wird insbesondere im Nutzfahrzeugbereich als Reduktionsmittel Ammoniak im Abgas vor einem entsprechenden Reduktionsmittelkatalysator benötigt. Dabei wird bei heutigen Verfahren oftmals durch Einblasen eines wässrigen Harnstoff-Luft-Aerosols mittels Druckluft in das Motorabgas durch Thermolyse und anschließende katalysierte Hydrolyse das eigentliche Reduktionsmittel Ammoniak freigesetzt.

Im Hinblick auf einen möglichen Einsatz in Personenkraftwagen ist dieses Verfahren mit Drucklufteinblasung aufgrund hoher Systemkomplexität (Kosten, Bauraum, Druckluftversorgung) allerdings als wenig marktgerecht einzustufen.

Ein weiteres Verfahren zur Vermeidung der Druckluftabhängigkeit sieht die Einspritzung einer Harnstofflösung (AdBlue) in die Motorenabgase vor. Zu diesem Zweck kommen beispielsweise Pumpen zur Druckbeförderung des AdBlue zum Einsatz.

zur Anwendung kommen dabei oftmals Ventile, wie sie aus der Benzineinspritzung bekannt sind und welche verschiedene Nachteile aufweisen. Schwierigkeiten bereitet bei diesen Ventilen beispielsweise die Notwendigkeit der Kühlung der (zumeist elektrischen) Ventile, welche unmittelbar an der heißen Abgasanlage angebracht sind. Weiterhin ist die Wintertauglichkeit derartiger Systeme als problematisch einzustufen. Bei Temperaturen unter -11°C gefriert die gebräuchliche Harnstoff-Wasser-Lösung und dehnt sich aus. Somit ist zur Erzielung einer Wintertauglichkeit derartiger Ventile und weiterer betroffener Systemkomponenten (Pumpen, Druckregelung usw.) ein erheblicher konstruktiver und damit die Systemkomplexität erhöhender Aufwand in Kauf zu nehmen (z. B. eine eisdruckfeste Konstruktion, rücksaugende Pumpen etc.).

In DE 196 46 643 C1 wird eine Anlage zur Stickoxid-Reduktionsmitteleinspritzune in einen Abgasstrom beschrieben. Dabei wird das Reduktionsmittel durch eine Mehrzahl feiner Düsenöffnungen hindurch in Form feiner Strahlen mittels lokaler, getakteter Überdruckerzeugung steuerbar in den Abgasstrom eingespritzt. Als Düsen werden dabei piezoelektrisch gesteuerte Düsen ähnlich den Düsen in piezoelektrischen Tintenstrahldruckköpfen oder Düsen mit getakteten Heizwiderstandselementen, ähnlich bekannten Bubble-Jet-Tintenstrahldruckköpfen, eingesetzt. Die in der DE 196 46 643 C1 beschriebene Anordnung ist jedoch apparativ aufwändig, insbesondere hinsichtlich der aggressiven Fluide störanfällig und teuer.

Aus der DE 103 24 482 A1 ist es bekannt, ein Dosierventil, das aus dem Rücklaüf eines Reduktionsmittelkreislaufs gespeist wird, unter Einstellung eines bestimmten Tastverhältnisses anzusteuern. Der Reduktionsmittelkreislauf kann hierbei über ein Druckregelventil geregelt bzw. ein- und ausgeschaltet werden. Das Ventil ist am Abgasrohr montiert, es müssen mechanisch robuste und gegen Kurzschluss abgesicherte elektrische Leitungen und Steckverbindungen zwischen einem Steuergerät und dem Ventil gelegt bzw. eingesetzt werden. Das elektrisch schaltbare Ventil ist ferner der Hitze des Abgasrohrs ausgesetzt und kann durch einen Fluidkreislauf in Form des Reduktionsmittelkreislaufs gekühlt werden.

Aus der US 2004/0093856 ist es bekannt, mittels einer Dosierpumpe ein Reduktionsmittel durch ein Sprührohr hindurch in den Abgastrakt einzubringen.

### Vorteile der Erfindung

Es wird ein Dosiersystem bzw. ein Verfahren zur Dosierung fluider, schadstoffreduzierender Medien, insbesondere wässriger Harnstofflösungen, vorgeschlagen, bei welchem in vorteilhafter Weise mindestens ein pulsweitengesteuertes Transportmittel eingesetzt wird. Die Dosierung soll in ein Kraftfahrzeug-Abgassystem erfolgen, welches insbesondere einen Katalysator aufweisen kann. Infolge eines Aktors in Form eines einem Düsen modul vorgeordneten pulsweitenmoduliert angesteuerten Transportmittels ist der Aktor besser gegen Umwelteinflüsse wie extreme Temperaturen, Schlag, Stoss, Partikel geschützt. Darüber hinaus entfallen externe elektrische Leitungen zu einem Ventil, und eine Vereinfachung des hydraulischen Systems (Wegfall eines Kühlkreislaufs) ist möglich, weniger Bauteile sind erforderlich und insbesondere die Fünktionalität eines Pumpenmoduls bzw. einer Dosierpumpe kann platzsparend und kostengünstig dargestellt werden. Darüber hinaus kann das Düsenmodul auf das Erzeugen des Sprays und die Umweltbedingungen (Temperaturfestigkeit) optimiert werden. Alle Komponenten können eisdruckfest ausgeführt werden, wodurch sich eine Entleerung der Leitungen insbesondere nach Betriebsende erübrigt, eine Wintertauglichkeit kann gewährleistet werden.

Insbesondere als vorteilhaft erweist sich die pulsweitenmodulierte Ansteuerung eines Pumpenmoduls bzw. einer Dosierpumpe, wodurch die Funktionen Druckerzeugung, Fluidförderung und Mengenzumessung in einem elektrisch ansteuerbaren Bauteil vereint werden können, während die mechanische Funktion der Sprayaufbereitung mittels einer mechanischer Düse optimiert werden kann.

Weitere Vorteile ergeben sich durch die in den abhängigen Ansprüchen und in der Beschreibung genannten Merkmale bzw. Eigenschaften.

Ein Druckentlastungselement in Form einer Druckentlastungsblende realisiert in einfacher und kostengünstiger Weise, zum Beispiel als Bohrung mit definiertem Durchmesser in der Pumpe integriert, ein Verfahren zur Dosierung, mit dem beispielsweise eine sich selbst öffnende Düse schnell in einem Zeitraum von 10 Millisekunden zuverlässig geschlossen werden kann. Dadurch kann präziser dosiert werden, ferner ist die Tropfengröße bei Dosierende kleiner. Dadurch verringert sich die Gefahr ungleichmässiger Verteilung von AdBlue im Abgastrakt bzw. die Gefahr von Ablagerungen.

### Zeichnungen

Anhand der Zeichnungen wird die Erfindung nachstehend beschrieben. Die Erfindung ist jedoch nicht auf die dargestellten Ausführungsbeispiele beschränkt. Gleiche Bezugsziffern kennzeichnen dabei gleiche bzw. einander in ihrer Funktion entsprechende Bauteile. Es zeigt:
- Figur 1: ein Beispiel eines Systems zur selektiven katalytischen Reduktion (SCR) in Nutzfahrzeugen,
- Figur 2: ein Dosiersystem mit einer pulsweitenangesteuerten Dosierpumpe und einer selbstöffnenden Düse,
- Figur 3: ein zweites Dosiersystem,
- Figur 4: ein erfindungsgemäßes Dosiersystem,
- Figur 5: ein zweites erfindungsgemäßes Dosiersystem,
- Figur 6: ein Flussdiagramm zum Verfahren der pulsweitenmodulierten Dosierung.

### Beschreibung der Ausführungsbeispiele

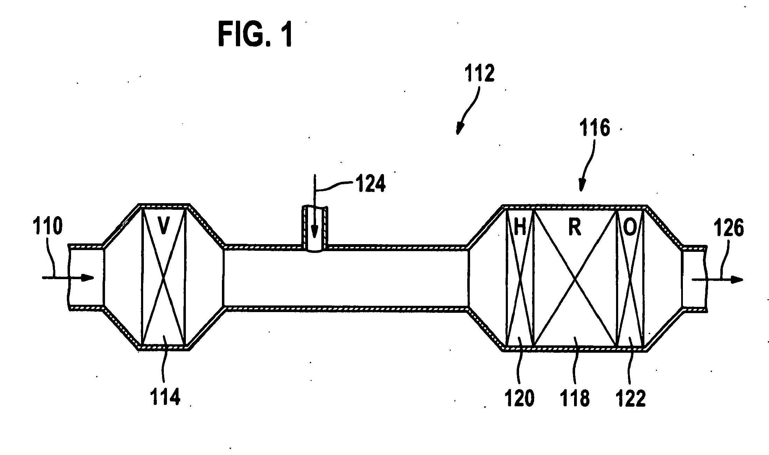

In Figur 1 ist exemplarisch ein System zur selektiven katalytischen Reduktion (SCR) dargestellt, wie es insbesondere im Nutzfahrzeugbereich von Interesse ist

Dabei werden Abgase 110 von einem Verbrennungsmotor in einen zweistufigen Katalysator 112 eingebracht Der zweistufige Katalysator 112 weist einen Vorkatalysator 114 und einen Hauptkatalysator 116 auf. Letzterer wiederum weist einen Reduktionskatalysator 118, einen Hydrolysekatalysator 120 und einen Oxidationskatalysator 122 auf. Das Reduktionsmittel 124 wird beispielsweise luftunterstützt vor dem Reduktionskatalysator 118 in das Abgassystem eingebracht Dieses wässrige Aerosol 124 wird durch Thermolyse und anschließende katalysierte Hydrolyse zersetzt und bildet das eigentliche Reduktionsmittel Ammoniak, welches wiederum mit den Stickoxiden der Motorenabgase 110 reagiert und diese in Stickoxid reduzierte Abgase 126 umwandelt. Die Anwendung des SCR-Verfahrens ist jedoch nicht auf den in Figur 1 dargestellten Katalysatortyp beschränkt, sondern es lassen sich auch andere Ausführungen von Katalysatoren einsetzen. So sind beispielsweise die Katalysatoren 114, 120 und 122 nicht zwingend erforderlich.

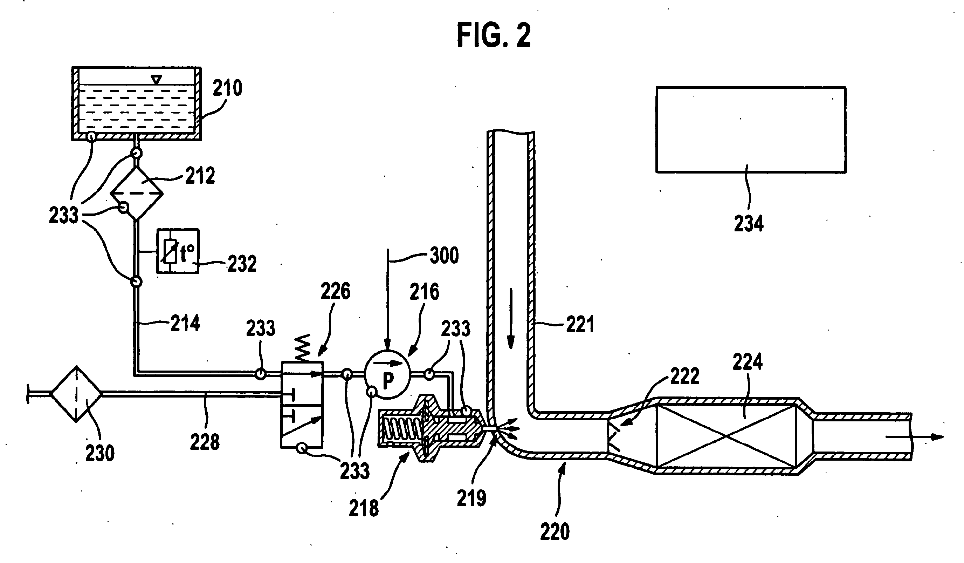

In Figur 2 ist ein Dosiersystem zum Dosieren fluider, schadstoffreduzierender Medien mittels einer Dosierpumpe 216 und einer Düseneinheit 218 dargestellt. In diesem Beispiel wird eine Harnstoff-Wasser-Lösung (AdBlue) eingesetzt, welche in einem entsprechenden Vorratstank 210 gespeichert ist Der Vorratstank 210 ist über einen Filter 212 und ein Rohrleitungssystem 214 mit einer Dosierpumpe 216 verbunden. Der Filter 212 dient insbesondere dazu, ein Eindringen von Partikeln aus dem Vorratstank 210 in die Dosierpumpe 216 und/oder die Düseneinheit 218 zu verhindern.

Unmittelbar in die Dosierpumpe 216 ist eine selbstöffnende Düseneinheit 218 integriert, welche bei einem bestimmten Druck öffnet und die geförderte Harnstoffmenge an der Einspritzstelle 219 in ein Abgassystem 220 einsprüht. Wie in Figur 2 dargestellt, weist in diesem Ausführungsbeispiel das Abgassystem 220 ein Abgasrohr 221, einen statischen Mischer 222 und einen Katalysator 224 auf. Die Anordnung weist somit Transportmittel (212, 214, 233, 226, 216) auf, die strömungstechnisch zwischen dem Vorratsbehälter 210 und dem Düsenmodul bzw. der Düse 218 angeordnet sind. Unter "selbstöffnender Düse" ist dabei eine Düse zu verstehen, welche, solange der Druck des zugeführten Fluids einen vorgegebenen Mindestdruck unterschreitet, geschlossen ist. Erreicht der Druck des Fluids hingegen den Mindestdruck oder überschreitet er diesen, so öffnet die Düse und dosiert Fluid in das Abgassystem des Kraftfahrzeugs.

Dieses Einsprühen ist bezüglich Sprühbild und Tropfengröße so optimiert, dass es optimal an die Einspritzstelle 219 angepasst ist. Alternativ ist auch eine Variante mit einem oder mehreren schnurförmigen Strahlen denkbar, bei der der mindestens eine schnurförmige Strahl im Abgassys-tem 220 auf eine (in Figur 2 nicht dargestellte) Prallplatte oder einen Prallkörper gerichtet ist und dadurch entsprechend verteilt wird.

Unmittelbar vor der Dosierpumpe 216 ist ein Belüftungsventil 226 in das Rohrleitungssystem 214 eingelassen, über welches die Dosierpumpe 216 und die Düseneinheit 218 über ein Luftleitungssystem 228 und einen Luftfilter 230 mit Luft befüllt werden können. Dies ist insbesondere beim Abschalten des Motors bei geringen Umgebungstemperaturen ein wirksamer Schutz gegen Gefrierschäden am Dosiersystem.

Zusätzlich sind das Rohrleitungssystem 214, das Belüftungsventil 226, die Dosierpumpe 216 und die Düseneinheit 218 beheizbar ausgelegt. Die Temperatur der Harnstofflösung im Rohrleitungssystem 214 wird ggf. durch einen oder mehrere Temperatursensoren 232 überwacht, was beispielsweise zur rechnerischen Korrektur des Massenstroms und somit zum Ausgleich von temperaturbedingten Dichteschwankungen genutzt werden kann. Die Temperatursensoren 232 können an verschiedenen Stellen im System angeordnet sein. Weiterhin sind an verschiedenen Stellen des Systems, insbesondere am Vorratstank 210, am Filter 212, am Belüftungsventil 226, an der Dosierpumpe 216, am Dosierventil 218 sowie dazwischen an verschiedenen Stellen im Rohrleitungssystem 214 wahlweise verschiedene Heizelemente 233 angeordnet (in Figur 2 schematisch dargestellt), welche sowohl zur Regelung der Temperatur als auch zum Auftauen des Systems bei niedrigen Umgebungstemperaturen eingesetzt werden können.

Weiterhin sind im Rohrleitungssystem 214 sowie in der Dosierpumpe 216 verschiedene Drucksensoren angeordnet, welche ganz oder teilweise elektronisch ausgelesen und überwacht werden können. So kann insbesondere ein Drucksensor zwischen der Dosierpumpe 216 und der Düseneinheit 218 angeordnet sein, dessen Messdaten zur Verbesserung der Massenstromberechnung und zur Überwachung des Systems beitragen können.

Das dargestellte Dosiersystem wird im Betrieb des Verbrennungsmotors ständig vom Steuergerät 234 überwacht und gesteuert. Das Steuergerät 234 kann ein separates Steuergerät oder Bestandteil eines ohnehin in einem Kraftfahrzeug vorhandenen Motorsteuerungsgeräts (Engine Control Unit, "ECU") sein. So wertet das Steuergerät 234 ständig alle Druck- und Temperatursignale aus, steuert die Pumpleistung der Dosierpumpe 216 und steuert die Tätigkeit des Belüftungsventils 226. Auch ein (in Fig. 2 nicht dargestelltes) Heizsystem kann eingesetzt und von dem Motorsteuerungsgerät 234 gesteuert werden, beispielsweise um bei niedrigen Betriebstemperaturen ein Einfrieren des Rohrleitungssystems 214 zu verhindern.

Das Steuergerät 234 steuert die Dosierpumpe pulsweitenmoduliert an (pulsweitenmodulierte Ansteuerung 300). Das bedeutet, dass die elektrisch angesteuerte Pumpe mit einem Betriebsstrom beaufschlagt wird, der entweder einen vorgegebenen, konstanten und von Null verschiedenen Wert (den normalen, durch die Pumpenkonstruktion bedingten Betriebsstrom) oder den Wert Null einnimmt. Mit anderen Worten, es erfolgt eine zeitliche Modulation des Betriebsstroms, wobei der Betriebsstrom entweder Null ist (die Pumpe also außer Betrieb ist) oder einen festen vorgegebenen von Null verschiedenen Wert einnimmt, der immer der gleiche ist, wenn die Pumpe in Betrieb ist und dem normalen Betriebsstrom der betreffenden Pumpe entspricht. Das bedeutet, dass im Falle einer Drehkolbenpumpe die Drehzahl der Pumpe entweder Null ist oder einen dem normalen Betriebsstrom der Pumpe entsprechenden Wert aufweist. In jedem Fall öffnet sich die selbst öffnende Düse immer dann, wenn die Pumpe mit dem normalen Betriebsstrom beaufschlagt wird, also das Ansteuersignal der Pumpe den Wert "I" hat. Hat jedoch das Ansteuersignal der Pumpe den Wert "0", ist sie außer Betrieb und entsprechend zumindest kurze Zeit nach Ausschalten der Pumpe die sich selbst öffnende Düse geschlossen. Entsprechend einer pro Zeiteinheit erforderlichen Menge an schadstoffreduzierendem Medium stellt bzw. regelt das Steuergerät ein bestimmtes Tastverhältnis des Pumpen-Ansteuersignals ein. Das Tastverhältnis ist hierbei das Verhältnis der Zeitdauer, in der die Pumpe eingeschaltet ist (Ansteuersignal mit dem Wert "1"), zu der Zeitdauer, in der die Pumpe ausgeschaltet ist (Ansteuersignal mit dem Wert "0"). Dabei können innerhalb einer Betriebsphase Zeiten auftreten, in denen kontinuierlich das schadstoffreduzierende Medium eingespritzt wird, und es können Zeiten auftreten, in denen aufgrund geringeren Bedarfs während einer Betriebsphase der Brennkraftmaschine nur zeitweise bzw. getaktet in den Abgastrakt eingespritzt wird.

Das in Fig. 2 dargestellte Dosiersystem weist gegenüber herkömmlichen Systemen eine Reihe entscheidender Vorteile auf. So ist das Dosiersystem, da beispielsweise anstelle einer Membranpumpe und eines Dosierventils die kostengünstigeren Bauteile Dosierpumpe 216 und selbstöffnende Düseneinheit 218 verwendet werden können, kostengünstig herzustellen. Weiterhin ist das beschriebene Dosiersystem mit einer geringen Baugröße herstellbar. Dies ermöglicht insbesondere auch den Einsatz in Personenkraftwagen. Bislang übliche Systeme sind hingegen aufgrund ihrer hohen Baugröße zumeist lediglich in Lastkraftwagen einsetzbar. Auch eine Druckluftversorgung ist nicht erforderlich, was die Baugröße des Systems zusätzlich verringert. Das beschriebene Dosiersystem weist zudem gegenüber herkömmlichen Systemen eine erheblich verringerte Anfälligkeit gegenüber Störungen auf, insbesondere auch bei niedrigen Temperaturen. Dies wird insbesondere durch die Möglichkeit des Belüftens mittels des Belüftungsventils 226 und die Möglichkeit einer Beheizung des Dosiersystems gewährleistet. Über das Belüftungsventil kann beim Abstellen des Kraftfahrzeugmotors Luft in die mindestens eine Pumpe und/oder die mindestens eine selbstöffnende Düse befördert werden. Dabei kann die geringe Restmenge an Fluid in der Pumpe und/oder der Düse, beispielsweise in das Abgassystem entleert werden. Die hierbei zu erwartende Menge kann als unkritisch angesehen werden und kann beispielsweise durch das Steuergerät erfasst, zwischengespeichert und bei einem erneuten Start des Kraftfahrzeugmotors in eine weitere Berechnung der zu dosierenden Menge des Fluids einbezogen werden. In diesem Fall sollte insbesondere die mindestens eine Dosierpumpe so ausgelegt sein, dass sie einen Druck zur selbstöffnenden Düse hin auch mit Luft oder Schutzgas als Medium erzeugen kann.

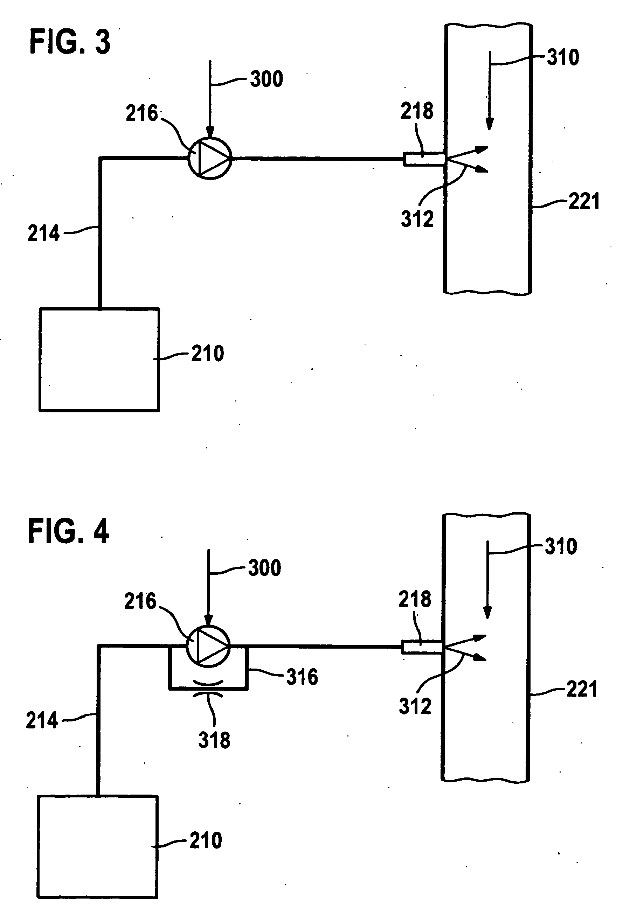

Figur 3 zeigt eine im Vergleich zu Figur 2 vereinfachte Ausführungsform eines Dosiersystems. Gleiche oder ähnliche Bestandteile wie in der Anordnung nach Figur 2 sind mit gleichem Bezugszeichen versehen und werden nicht nochmals beschrieben. Auch hier erfolgt ein Ansaugen beispielsweise einer wässrigen Harnstofflösung ("AdBlue") aus einem Vorratstank 210, wobei die zwischen dem Tank und der Düse 218 angeordneten Transportmittel (214, 216) eine Dosierpumpe 216, beispielsweise eine Membranpumpe, aufweisen, die pulsweitenmoduliert angesteuert wird (300). Die bei anliegendem Fluiddruck sich selbst öffnende und mit der Pumpe über die Leitung 214 verbundene Düse 218 ist am Abgasrohr 221 angeordnet und spritzt das das fluide, schadstoffreduzierende Medium (AdBlue) in die Abgasströmung 310 ein (Fluidstrahl 312). Im Vergleich zur Anordnung nach Figur 2 entfällt hier eine Belüftungsanordnung. Im Rahmen der pulsweitenmodulierten Ansteuerung berechnet das Steuergerät für die Zeitphasen, in denen die Pumpe angesteuert wird, die Dauer der Pumpenbestromung anhand einer Kennlinie, in der der funktionale Zusammenhang zwischen Einspritzdauer und Pumpenbestromungsdauer hinterlegt ist.

Figur 4 zeigt ein erfindungsgemäßes Dosiersystem, das in Abwandlung der Anordnung nach Figur 3 ein Druckentlastungselement in Form eines Umgehungspfades aufweist. Der Umgehungspfad wird gebildet durch eine Umgehungsleitung 316, die den Ausgang der Pumpe 216 mit deren Eingang verbindet, wobei in der Umgehungsleitung 316 eine Drosselstelle in Form einer Druckentlastungsblende angeordnet ist, beispielsweise in Form einer als Verengung in der Leitung 316 ausgebildeten Drossel.

In der Ausführungsform nach Figur 4 umfassen die Transportmittel neben der Leitung 214 und der Pumpe 216 auch eine Umgehungsleitung 316 und eine Druckentlastungsblende 318. Mit der Druckentlastungsblende zwischen Druck- und Saugseite der Pumpe wird nach einer Einspritzung ein schneller Druckabbau in der Dosierleitung zwischen Pumpe bzw. Pumpenmodul (Pumpe mit integrierter Druckentlastungsblende) und Abgassystem erzielt, weil kleine Mengen an AdBlue über die Blende in die Saugleitung, also die Leitung zwischen Vorratsbehälter und Pumpe, strömen können. Dadurch schließt die Düse schneller und die Tropfengröße bei Dosierende ist kleiner. Dadurch verringert sich die Gefahr ungleichmäßiger Verteilung von AdBlue im Abgastrakt bzw. die Gefahr von Ablagerungen. Diese Blende kann als Bohrung mit definiertem Durchmesser ausgeführt und beispielsweise in die Pumpe ("Pumpenmodul") integriert sein.

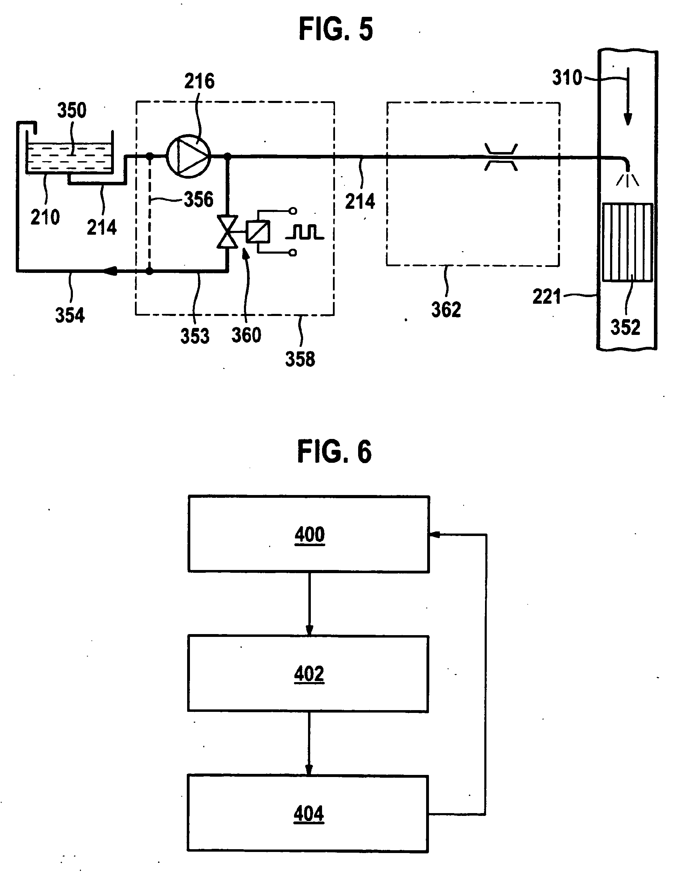

Figur 5 zeigt ein erfindungsgemäß Dosiersystem, bei dem aus einem Tank 210 Harnstoff-Wasser-Lösung 350 mittels einer Pumpe 216 angesaugt und über das Rohrleitungssystem 214 und ein daran angeordnetes Düsenmodul 362 in den Abgastrakt stromaufwärts des SCR-Katalysators 352 eingespritzt wird. Das Düsenmodul ist als Verengung im Rohrleitungssystem 214 ausgebildet und einem Sprührohr vorgeordnet, das sich vor dem SCR-Katalysator in das Abgasrohr 221 hinein erstreckt. Das Pumpenmodul 358 weist im vorliegenden Ausführungsbeispiel neben der Pumpe 216 auch ein elektrisch schaltbares, sogenanntes Entlastungsventil 360 auf, das über eine Rücklaufleitung 353 den Ausgang der Pumpe 216 mit einer zum Vorratsbehälter führenden Tankrücklaufleitung 354 verbindet, die oberhalb des Flüssigkeitspegels im Vorratsbehälter mündet. Alternativ oder ergänzend zur Tank-Rücklaufleitung 354 kann die Rücklaufleitung 353 auch mit einer Rücklaufleitung 356 zum Pumpeneingang verbunden sein. Die Transportmittel 214, 358 umfassen hier somit neben der Leitung 214 ein Pumpenmodul 358 mit einer Dosierpumpe 216 und einem Entlastungsventil 360.

Wie auch in dem vorhergehenden Ausführungsbeispiel wird der Massenstrom des schadstoffreduzierenden Mediums pulsweitenmoduliert über die Druckdifferenz am Düsenmodul anstatt über eine Querschnittsveränderung an einem Aktor wie bei aus dem Stand der Technik bekannten Systemen gesteuert bzw. geregelt. Da der Druck in einem hydraulischen System ideal überall gleich ist, ist der Ort der Druckvariation unabhängig vom Ort der Dosierung. D.h. die Druckvariation kann an einem beliebigen Ort im hydraulischen System stattfinden, zum Beispiel schon, wie hier, im Pumpenmodul. Dabei kann die Pumpe des Pumpenmoduls pulsweitenmoduliert angesteuert werden, alternativ oder in Kombination hierzu kann das Entlastungsventil pulsweitenmoduliert angesteuert werden. Bei geöffnetem Entlastungsventil und laufender Pumpe wird das Medium zum Tank und alternativ oder in Kombination hierzu zur Eingangsseite der Pumpe zurückbefordert, so dass auf diese Weise die Pumpe ständig laufen und eine Modulation der Dosierung über die Ansteuerung des Entlastungsventils erfolgen kann. Es kann also eine pulsierende Ansteuerung der Pumpe erfolgen, dann wird nur Druck erzeugt, wenn dosiert werden soll. Es kann alternativ hierzu oder auch in Kombination bei Betrieb und damit bei Bereitstellung von Druck mittels des Entlastungsventils eine pulsierende Druckentlastung der Leitung 214 zwischen Pumpe und Düsenmodul durchgeführt werden, wodurch die Dosierung entsprechend unterbrochen oder wieder aufgenommen werden kann. Das Pumpmodul (hier: Pumpe, Entlastungsventil und teilweise Leitungen) ist entweder aus separaten Komponenten gebildet, die funktional und begrifflich zu einem "Pumpmodul" zusammengefasst sind, oder Entlastungsventil und Pumpe bilden nicht nur eine begriffliche, sondern auch eine konstruktive, insbesondere eine integrierte Einheit. Die Dosierung bzw. Erzeugung eines Sprays erfolgt mittels des Düsenmoduls 362, das infolge der funktionalen Trennung von der Ansteuerung spraybildungsoptimiert und temperaturfest ausgelegt werden kann, beispielsweise in Form einer Düse, die mittels einer Halterung am Abgastrakt befestigt ist, also keine elektrischen und/oder beweglichen Komponenten aufweist.

Alternativ zur Kombination Rohrverengung/Sprührohr kann auch hier das Düsenmodul eine sich selbst öffnende Düse aufweisen, der entweder ein Sprührohr nachgeordnet ist oder die unmittelbar am Abgastrakt angeordnet ist oder in diesen hineinragt.

Unter einer Dosierpumpe ist bei allen Ausführungsbeispielen neben einer einfachen Membranpumpe auch eine Pumpe zur Beförderung eines Fluids zu verstehen, bei welcher die geförderte Volumenflussrate mit einer vorgegebenen Genauigkeit einstellbar ist. Es kann jedoch darunter auch eine Pumpe verstanden werden, welche ein bestimmtes Volumen transportiert, wobei das zu transportierende Volumen mit einer vorgegebenen Genauigkeit einstellbar sein soll. Weiterhin kann unter einer Dosierpumpe auch eine Pumpe verstanden werden, bei der die Beförderung des Fluids mit einem vorgegebenen Druck erfolgt, wobei der Druck beispielsweise mit einer vorgegebenen Genauigkeit einstellbar ist. Aufgabe der Dosierpumpe ist es im eingeschalteten Zustand insbesondere, das mindestens eine fluide, schadstoffreduzierende Medium mit vorgegebenem Druck und/oder mit vorgegebener Volumenflussrate zu transportieren. Jede Pumpe, deren Massenträgheit klein genug ist, damit sie entsprechend schnell genug in Bewegung gesetzt und wieder schnell genug zum Stillstand gebracht werden kann, kann eingesetzt werden. Hierdurch können auch kleine Mengen mit einer genügenden Genauigkeit zugemessen werden.

Figur 6 zeigt ein Flussdiagramm zum Verfahren der pulsweitenmodulierten Dosierung. Zunächst erfolgt eine Erfassung 400 von Betriebsgrößen, wie beispielsweise der Drehzahl der Brennkraftmaschine, der Motorlast, Restgehalt an Schadstoffen hinter der Abgasnachbehandlungseinheit. In einem weiteren Schritt 402 wird der Bedarf an dem schadstoffreduzierenden Medium, insbesondere der Bedarf pro Zeiteinheit, berechnet. In einem weiteren Schritt 404 erfolgt eine bedarfsabhängige pulsweitenmodulierte Ansteuerung eines Transportmittels, beispielsweise eines Pumpenmoduls, insbesondere einer Pumpe oder eines Druckentlastungsventils. Die Schritte 400, 402 und 404 laufen dabei wiederholt ab, solange die Brennkraftmaschine in Betrieb ist.

**Bezugszeichenliste**

| | |
|---|---|
| 110 | Abgase vom Verbrennungsmotor |
| 112 | zweistufiger Katalysator |
| 114 | Vorkatalysator |
| 116 | Hauptkatalysator |
| 118 | Reduktionskatalysator |
| 120 | Hydrolysekatalysator |
| 122 | Oxidationskatalysator |
| 124 | Harnstoff-Luft-Aerosol |
| 126 | Stickoxid-reduzierte Abgase |
| | |
| 210 | Vorratstank |
| 212 | Filter |
| 214 | Rohrleitungssystem |
| 216 | Dosierpumpe |
| 218 | integrierte, selbstöffnende Düseneinheit |
| 219 | Einspritzstelle |
| 220 | Abgassystem |
| 221 | Abgasrohr |
| 222 | statischer Mischer |
| 224 | Katalysator |
| 226 | Betüftungsventil |
| 228 | Luftleitungssystem |
| 230 | Luftfilter |
| 232 | Temperatursensor |
| 233 | Heizelemente |
| 234 | Steuergerät |
| | |
| 300 | pulsweitenmodulierte Ansteuerung |
| 310 | Abgasströmung |
| 312 | Strahl |
| 316 | Umgehungsleitung |
| 318 | Druckentlastungsblende |
| | |
| 350 | Harnstoff-Wasser-Lösung (Adblue) |
| 352 | SCR-Katalysator |
| 353 | Rücklaufleitung |
| 354 | Tank-Rücklaufleitung |
| 356 | Rücklaufleitung zum Pumpeneingang (alternativ oder ergänzen zu 354) |
| 358 | Pumpenmodul |
| 360 | Entlastungsventil |
| 362 | Düsenmodul |
| | |
| 400 | Erfassung von Betriebsgrößen |
| 402 | Berechnung des Bedarfs |
| 404 | Pulsweitenmodulierte Ansteuerung |

## Patentansprüche

1. Verfahren zur Dosierung eines fluiden, schadstoffreduzierenden Mediums, insbesondere einer wässrigen Harnstofflösung (350), in ein Kraftfahrzeug-Abgassystem (220), bei dem das fluide Medium zu einem Düsenmodul (218, 362), insbesondere einer Düse oder einem ventil, befördert und mittels des Düsenmoduls in das Abgassystem (220) eingeführt wird, wobei ein dem Düsenmodul vorgeordnetes Transportmittel (212, 214, 233, 226, 216; 214, 216; 214; 216, 316, 318; 214, 358) pulsweitenmoduliert angesteuert (404) wird, wobei die Transportmittel ein eine Pumpe aufweisendes Pumpenmodul (216) umfassen; wobei die Ansteuerung des Transportmittels eine pulsweitenmodulierte Ansteuerung des Pumpenmoduls umfasst, **dadurch gekennzeichnet dass** das Pumpenmodul ein Druckentlastungselement (316, 318; 353, 354, 356, 360) aufweist, wobei das Druckentlastungselement einen Umgehungspfad (316; 353) aufweist, der den Ausgang der Pumpe mit deren Eingang und/oder mit einer Rücklaufleitung (354) zu einem Behälter (210) verbindet, wobei zumindest in den Zeitabschnitten, in denen die Pumpe nicht in Betrieb ist, das fluide, schadstoffreduzierende Medium über den Umgehungspfad (316; 353) von der Ausgangsseite der Pumpe zu ihrer Eingangsseite bzw. zum Behälter (210) zumindest teilweise zurückströmt, und wobei das Düsenmodul eine selbstöffnende Düse (218) aufweist, so dass die Pumpe das Medium zu der selbstöffnenden Düse (218) befördert und das Medium über die Düse in das Kraftfahrzeug-Abgassystem (220) eingespritzt werden kann.

2. Verfahren nach Anspruch 1, **dadurch gekennzeichnet, dass** das Druckentlastungselement eine im Umgehungspfad angeordnete Drosselstelle, insbesondere eine Druckentlastungsblende (318) bzw. Drossel, aufweist.

3. Verfahren nach einem der Ansprüche 1 oder 2, **dadurch gekennzeichnet, dass** im Umgehungspfad (353) ein Entlastungsventil (360) angeordnet ist.

4. Verfahren nach Anspruch 3, **dadurch gekennzeichnet, dass** das Entlastungsventil elektrisch schaltbar ist.

5. Verfahren nach einem der vorhergehenden Ansprüche, **dadurch gekennzeichnet, dass** die Ansteuerung (404) elektrisch erfolgt und dass sie eine zeitliche Modulation (300) des Betriebsstroms der Pumpe zwischen einem Wert Null und einem von Null verschiedenen vorgegebenen Wert umfasst.

6. Verfahren nach Anspruch 4 oder 5, **dadurch gekennzeichnet, dass** die Ansteuerung eine Pulsweitenmodulation des Schaltstroms des Entlastungsventils (360) umfasst.

7. Verfahren nach Anspruch 5 oder 6, **dadurch gekennzeichnet, dass** die Förderleitung des Pumpenmoduls (216, 360) von Medium zum Abgassystem durch ein Variierbares Tastverhältnis der Modulation des Betriebsstroms und/oder der Modulation des Schaltstroms verändert werden kann.

8. Verfahren nach einem der vorhergehenden Ansprüche, **dadurch gekennzeichnet, dass** mindestens eine Betriebsgröße, wie beispielsweise die Drehzahl der Brennkraftmaschine des Kraftfahrzeuges, deren Last, die Temperatur des schadstoffreduzierenden Mediums und/oder der Druck des schadstoffreduzierenden Mediums in einer Verbindungsleitung zwischen Pumpenmodul und Abgassystem und/oder die Restkonzentration an Schadstoffen nach erfolgter Schadstoffreduktion, insbesondere die Restkonzentration an Stickoxiden, erfasst (400) wird.

9. Verfahren nach Anspruch 8, **dadurch gekennzeichnet, dass** in Abhängigkeit von gemessenen Werten für die erfasste Betriebsgröße bzw. für die erfassten Betriebsgrößen der Bedarf an schadstoffreduzierendem Medium, insbesondere der Bedarf an schadstoffreduzierendem Medium pro Zeiteinheit, berechnet (402) wird.

10. Verfahren nach Anspruch 9, **dadurch gekennzeichnet, dass** die pulsweitenmodulierte Ansteuerung (404) in Abhängigkeit vom Bedarf an dem fluiden, schadstoffreduzierenden Medium eingestellt bzw. geregelt wird.

11. Verfahren nach einem der vorhergehenden Ansprüche, **dadurch gekennzeichnet, dass** die Pumpe das Medium aus mindestens einem bzw. dem, insbesondere als Vorratsbehälter dienenden, Behälter (210) ansaugt.

12. Dosiersystem zur Dosierung eines fluiden, schadstoffreduzierenden Mediums, insbesondere einer wässrigen Harnstofflösung (350), in ein Kraftfahrzeug-Abgassystem (220) zur Durchführung eines Verfahrens zur Dosierung nach einem der vorhergehenden Ansprüche, bei dem das fluide Medium über Transportmittel zu einem Düsenmodul (218, 362), insbesondere einer Düse oder einem Ventil, beförderbar und mittels des Düsenmoduls in das Abgassystem (220) einführbar ist, wobei, dass ein Kontrollmittel (234) eingereichtet ist zur pulsweitenmodulierten Ansteuerung (404) des Transportmittels (212, 214, 233, 226, 216; 214, 216; 214, 216, 316, 318; 214, 358), beispielsweise eines Pumpenmoduls (358; 216, 360), insbesondere einer Pumpe (216), wobei die Transportmittel ein eine Pumpe aufweisendes Pumpenmodul (216) umfassen, wobei die Ansteuerung des Transportmittels eine pulsweitenmodulierte Ansteuerung des Pumpenmoduls umfasst, **dadurch gekennzeichnet dass** das Pumpenmodul ein Druckentlastungselement (316, 318; 353, 354, 356, 360) aufweist, wobei das Druckendastungselement einen Umgehungspfad (316; 353) aufweist, der den Ausgang der Pumpe mit deren Eingang und/oder mit einer Rücklaufleitung (354) zu einem Behälter (210) verbindet, wobei zumindest in den Zeitabschnitten, in denen die Pumpe nicht in Betrieb ist, das fluide, schadstoffreduzierende Medium über den Umgehungspfad (316; 353) von der Ausgangsseite der Pumpe zu ihrer Eingangsseite bzw. zum Behälter (210) zumindest teilweise zurückströmt, und wobei das Düsenmodul eine selbstöffnende Düse (218) aufweist, so dass die Pumpe das Medium zu der selbstöffnenden Düse (218) befördert und das Medium über die Düse in das Kraftfahrzeug-Abgassystem (220) eingespritzt werden kann.

13. Computerprogramm mit Programmcode-Mitteln, um die Schritte eines Verfahrens nach einem der Ansprüche 1 bis 11 durchzuführen, wenn das Computerprogramm auf einem Computer oder einer entsprechenden Recheneinheit, insbesondere einem Steuergerät bzw. einem Kontrollmittel eines Systems nach Anspruch 12, ausgeführt wird.

14. Computerprogrammprodukt mit Programmcode-Mitteln, die auf einem computerlesbaren Datenträger gespeichert sind, um ein Verfahren nach einem der Ansprüche 1 bis 11 auszuführen, wenn das Computerprogrammprodukt auf einem Computer oder einer entsprechenden Recheneinheit, insbesondere einem Steuergerät bzw. einem Kontrollmittel eines Systems nach Anspruch 12; ausgeführt wird.

## Claims

1. Method for metering a fluid pollutant-reducing medium, in particular an aqueous urea solution (350), into a motor vehicle exhaust system (220), in which method the fluid medium is conveyed to a nozzle module (218, 362), in particular a nozzle or a valve, and is introduced into the exhaust system (220) by means of the nozzle module, with a transport means (212, 214, 233, 226, 216; 214, 216; 214, 216, 316, 318; 214, 358) which is positioned upstream of the nozzle module being activated (404) in a pulse-width-modulated manner, with the transport means comprising a pump module (216) which has a pump, with the activation of the transport means comprising a pulse-width-modulated activation of the pump module, **characterized in that** the pump module has a pressure relief element (316, 318; 353, 354, 356, 360), with the pressure relief element having a bypass path (316; 353) which connects the outlet of the pump to the inlet of said pump and/or to a return line (354) to a tank (210), with the fluid pollutant-reducing medium at least partially flowing back from the outlet side of the pump to the inlet side thereof or to the tank (210) via the bypass path (316; 353) at least in the time periods in which the pump is not in operation, and with the nozzle module having a self-opening nozzle (218) such that the pump conveys the medium to the self-opening nozzle (218) and the medium can be injected via the nozzle into the motor vehicle exhaust system (220).

2. Method according to Claim 1, **characterized in that** the pressure relief element has a throttle point, in particular a pressure relief orifice (318) or throttle, arranged in the bypass path.

3. Method according to either of Claims 1 and 2, **characterized in that** a relief valve (360) is arranged in the bypass path (353).

4. Method according to Claim 3, **characterized in that** the relief valve is electrically switchable.

5. Method according to one of the preceding claims, **characterized in that** the activation (404) takes place electrically and **in that** said activation comprises a temporal modulation (300) of the operating current of the pump between a value of zero and a predefined non-zero value.

6. Method according to Claim 4 or 5, **characterized in that** the activation comprises a pulse width modulation of the switching current of the relief valve (360).

7. Method according to Claim 5 or 6, **characterized in that** the feed capacity of the pump module (216, 360) for feeding medium to the exhaust system can be varied by means of a variable duty cycle of the modulation of the operating current and/or of the modulation of the switching current.

8. Method according to one of the preceding claims, **characterized in that** at least one operating variable such as the rotational speed of the internal combustion engine of the motor vehicle, the load of said internal combustion engine, the temperature of the pollutant-reducing medium and/or the pressure of the pollutant-reducing medium in a connecting line between the pump module and the exhaust system and/or the residual concentration of pollutants after the pollutant reduction has taken place, in particular the residual concentration of nitrogen oxides, is detected (400).

9. Method according to Claim 8, **characterized in that** the requirement for pollutant-reducing medium, in particular the requirement for pollutant-reducing medium per unit time, is calculated (402) as a function of measured values for the detected operating variable or operating variables.

10. Method according to Claim 9, **characterized in that** the pulse-width-modulated activation (404) is adjusted or regulated as a function of the requirement for fluid pollutant-reducing medium.

11. Method according to one of the preceding claims, **characterized in that** the pump sucks the medium from at least one tank (210), or the tank (210) which serves in particular as a reservoir.

12. Metering system for metering a fluid pollutant-reducing medium, in particular an aqueous urea solution (350), into a motor vehicle exhaust system (220) for carrying out a method for metering according to one of the preceding claims, in which metering system the fluid medium can be conveyed by transport means to a nozzle module (218, 362), in particular a nozzle or a valve, and can be introduced into the exhaust system (220) by means of the nozzle module, with a controlling means (234) being set up for the pulse-width-modulated activation (404) of the transport means (212, 214, 233, 226, 216; 214, 216; 214, 216, 316, 318; 214, 358), for example of a pump module (358; 216, 360), in particular of a pump (216), with the transport means comprising a pump module (216) which has a pump, with the activation of the transport means comprising a pulse-width-modulated activation of the pump module, **characterized in that** the pump module has a pressure relief element (316, 318; 353, 354, 356, 360), with the pressure relief element having a bypass path (316; 353) which connects the outlet of the pump to the inlet of said pump and/or to a return line (354) to a tank (210), with the fluid pollutant-reducing medium at least partially flowing back from the outlet side of the pump to the inlet side thereof or to the tank (210) via the bypass path (316; 353) at least in the time periods in which the pump is not in operation, and with the nozzle module having a self-opening nozzle (218) such that the pump conveys the medium to the self-opening nozzle (218) and the medium can be injected via the nozzle into the motor vehicle exhaust system (220).

13. Computer program having program code means for carrying out the steps of a method according to one of Claims 1 to 11 when the computer program is executed on a computer or a corresponding processor, in particular on a control unit or a controlling means of a system according to Claim 12.

14. Computer program product having program code means which are stored on a computer-readable data carrier in order to carry out a method according to one of Claims 1 to 11 when the computer program product is executed on a computer or a corresponding processor, in particular a control unit or a controlling means of a system according to Claim 12.

## Revendications

1. Procédé de dosage d'un milieu fluide, réduisant les substances nocives, notamment d'une solution d'urée aqueuse (350), dans un système de gaz d'échappement (220) d'un véhicule automobile, dans lequel le milieu fluide est refoulé vers un module de buse (218, 362), en particulier une buse ou une soupape, et est injecté dans le système de gaz d'échappement (220) au moyen du module de buse, un moyen de transport (212, 214, 233, 226, 216; 214, 216 ; 214, 216, 316, 318, 214, 358) monté en amont du module de buse étant commandé (404) par modulation de largeur d'impulsion, les moyens de transport comprenant un module de pompe (216) présentant une pompe, la commande du moyen de transport comprenant une commande du module de pompe par modulation de largeur d'impulsion, **caractérisé en ce que** le module de pompe présente un élément de décharge de pression (316, 318 ; 353, 354, 356, 360), l'élément de décharge de pression présentant un chemin de dérivation (316 ; 353), qui relie la sortie de la pompe à son entrée et/ou à une conduite de retour (354) vers un récipient (210), le milieu fluide réduisant les substances nocives revenant au moins en partie par le biais du chemin de dérivation (316 ; 353) du côté de la sortie de la pompe vers son côté d'entrée ou vers le récipient (210), au moins dans les intervalles de temps dans lesquels la pompe ne fonctionne pas, et le module de buse présentant une buse (218) à ouverture automatique, de sorte que la pompe refoule le milieu vers la buse (218) à ouverture automatique, et que le milieu puisse être injecté par le biais de la buse dans le système de gaz d'échappement (220) du véhicule automobile.

2. Procédé selon la revendication 1, **caractérisé en ce que** l'élément de décharge de pression présente un point d'étranglement disposé dans le chemin de dérivation, notamment un diaphragme de décharge de pression (318) ou un papillon d'étranglement.

3. Procédé selon l'une quelconque des revendications 1 ou 2, **caractérisé en ce que** dans le chemin de dérivation (353) est disposée une soupape de décharge (360).

4. Procédé selon la revendication 3, **caractérisé en ce que** la soupape de décharge peut être commutée électriquement.

5. Procédé selon l'une quelconque des revendications précédentes, **caractérisé en ce que** la commande (404) s'effectue de manière électrique, et **en ce qu'**elle inclut une modulation temporelle (300) du courant de fonctionnement de la pompe entre une valeur nulle et une valeur prédéfinie différente de zéro.

6. Procédé selon la revendication 4 ou 5, **caractérisé en ce que** la commande inclut une modulation de largeur d'impulsion du courant de commutation de la soupape de décharge (360).

7. Procédé selon la revendication 5 ou 6, **caractérisé en ce que** la puissance de refoulement du module de pompe (216, 360) du milieu vers le système de gaz d'échappement peut être modifiée par un rapport cyclique variable de la modulation du courant de fonctionnement et/ou de la modulation du courant de commutation.

8. Procédé selon l'une quelconque des revendications précédentes, **caractérisé en ce que** l'on détecte (400) au moins une grandeur de fonctionnement, comme par exemple le régime du moteur à combustion interne du véhicule automobile, sa charge, la température du milieu réduisant les substances nocives et/ou la pression du milieu réduisant les substances nocives, dans une conduite de liaison entre le module de pompe et le système de gaz d'échappement et/ou la concentration résiduelle en substances nocives après la réduction des substances nocives, en particulier la concentration résiduelle en oxydes d'azote.

9. Procédé selon la revendication 8, **caractérisé en ce que** l'on calcule (402) en fonction de valeurs mesurées pour la grandeur de fonctionnement détectée ou pour les grandeurs de fonctionnement détectées, le besoin en milieu réduisant les substances nocives, notamment le besoin en milieu réduisant les substances nocives par unité de temps.

10. Procédé selon la revendication 9, **caractérisé en ce que** la commande (404) par modulation de la largeur d'impulsion est ajustée ou régulée en fonction du besoin en milieu fluide réduisant les substances nocives.

11. Procédé selon l'une quelconque des revendications précédentes, **caractérisé en ce que** la pompe aspire le fluide hors d'au moins le ou un récipient (210) servant notamment de réservoir.

12. Système de dosage pour le dosage d'un milieu fluide réduisant les substances nocives, notamment d'une solution d'urée aqueuse (350), dans un système de gaz d'échappement (220) d'un véhicule automobile, pour mettre en oeuvre un procédé de dosage selon l'une quelconque des revendications précédentes, dans lequel le milieu fluide peut être refoulé par le biais de moyens de transport jusqu'à un module de buse (218, 362), notamment une buse ou une soupape, et peut être injecté dans le système de gaz d'échappement (220) au moyen du module de buse, un moyen de contrôle (234) étant prévu pour la commande (404) par modulation de la largeur d'impulsion du moyen de transport (212, 214, 233, 226, 216; 214, 216 ; 214, 216, 316, 318, 214, 358), par exemple un module de pompe (358 ; 216, 360), notamment une pompe (216), les moyens de transport comprenant un module de pompe (216) présentant une pompe, la commande du moyen de transport incluant une commande du module de pompe par modulation de la largeur d'impulsion, **caractérisé en ce que** le module de pompe présente un élément de décharge de pression (316, 318 ; 353, 354, 356, 360), l'élément de décharge de pression présentant un chemin de dérivation (316 ; 353) qui relie la sortie de la pompe à son entrée et/ou à une conduite de retour (354) vers un récipient (210), le milieu fluide réduisant les substances nocives revenant au moins en partie par le biais du chemin de dérivation (316 ; 353) du côté de la sortie de la pompe vers son côté d'entrée ou vers le récipient (210), au moins dans les intervalles de temps dans lesquels la pompe ne fonctionne pas, et le module de buse présentant une buse (218) à ouverture automatique, de sorte que la pompe refoule le milieu vers la buse (218) à ouverture automatique, et que le milieu puisse être injecté par le biais de la buse dans le système de gaz d'échappement (220) du véhicule automobile.

13. Programme informatique avec des moyens de code programme, destiné à exécuter les étapes d'un procédé selon l'une quelconque des revendications 1 à 11, quand le programme informatique est lancé sur un ordinateur ou une unité de calcul correspondante, notamment un appareil de commande ou un moyen de contrôle d'un système selon la revendication 12.

14. Produit de programme informatique avec des moyens de code programme, qui sont mémorisés sur un support de données lisible par ordinateur, afin de mettre en oeuvre un procédé selon l'une quelconque des revendications 1 à 11, quand le produit de programme informatique est réalisé sur un ordinateur ou une unité de calcul correspondante, notamment un appareil de commande ou un moyen de contrôle d'un système selon la revendication 12.
